(19) **Europäisches Patentamt**
**European Patent Office**
**Office européen des brevets**

(11) **EP 2 964 480 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(51) Int Cl.:
*H02H 3/42* (2006.01)  *B60L 3/00* (2006.01)
*B60L 3/12* (2006.01)  *B60L 15/00* (2006.01)
*B60L 7/14* (2006.01)  *H02H 6/00* (2006.01)

(21) Anmeldenummer: **14702763.5**

(22) Anmeldetag: **16.01.2014**

(86) Internationale Anmeldenummer:
**PCT/EP2014/050837**

(87) Internationale Veröffentlichungsnummer:
**WO 2014/135294 (12.09.2014 Gazette 2014/37)**

(54) **VERFAHREN ZUM ÜBERLAST-BETRIEB EINES HALBLEITERSCHALTERS EINES ELEKTRIFIZIERTEN KRAFTFAHRZEUGS UND MITTEL ZU DESSEN IMPLEMENTIERUNG**

METHOD FOR OPERATING A SEMICONDUCTOR SWITCH IN OVERLOAD, IN AN ELECTRIFIED MOTOR VEHICLE, MEANS FOR IMPLEMENTING SAID METHOD

PROCÉDÉ POUR OPÉRER UN INTERRUPTEUR À SEMICONDUCTEUR EN SURCHARGE, DANS UN VÉHICULE ÉLECTRIFIÉ ET MOYEN PERMETTANT SA MISE EN OELIGUVRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2013 DE 102013203661**

(43) Veröffentlichungstag der Anmeldung:
**13.01.2016 Patentblatt 2016/02**

(73) Patentinhaber: **Robert Bosch GmbH**
**70442 Stuttgart (DE)**

(72) Erfinder:
• **RICHTER, Martin**
**39340 Haldensleben (DE)**
• **TOBIAS, Christoph**
**71111 Waldenbuch (DE)**
• **KOLLER, Oliver Dieter**
**71384 Weinstadt (DE)**

(56) Entgegenhaltungen:
**WO-A1-00/13304  DE-A1-102007 035 825**

**Beschreibung**

Die vorliegende Erfindung betrifft ein Verfahren zum Betreiben eines elektrifizierten Kraftfahrzeugs mit einem Bordnetz, das wenigstens einen Halbleiterschalter aufweist, und Mittel zu dessen Implementierung.

Stand der Technik

Durch die zunehmende Elektrifizierung des Antriebsstrangs moderner Kraftfahrzeuge werden hier vermehrt Halbleiter, insbesondere in Form von Schaltelementen wie Transistoren, eingesetzt. Diese sind den unwirtlichen äußeren Bedingungen des Motorraums ausgesetzt, beispielsweise passiven Temperaturhüben. Passive Temperaturhübe entstehen dadurch, dass die Abwärme des Verbrennungsmotors den Motorraum während der Fahrt erwärmt.

Eine besonders hohe Belastung wirkt auf die Halbleiter des Umrichters der elektrischen Maschine in derartigen Kraftfahrzeugen, die zusätzlich durch aktive Temperaturhübe aufgrund der Eigenerwärmung bei hohem Strom belastet werden. Große Stromamplituden werden typischerweise während motorischen Boost- und generatorischen Rekuperationsvorgängen (in Fahrzeugen mit entsprechend betreibbaren elektrischen Maschinen) erreicht. Bei den Halbleitern des Umrichters handelt es sich um funktionskritische Komponenten, da ihr Ausfall zu einer Nichtfunktionalität der kompletten elektrischen Maschine führt.

Da die Anzahl und die Amplitude von Boost- und Rekuperationsvorgängen stark vom Anwendungsfall, also u.a. vom Fahrverhalten des Fahrers (aggressiv, defensiv) und/oder den Verkehrssituationen, in denen ein entsprechendes Kraftfahrzeug überwiegend bewegt wird (Stadtverkehr, Autobahn), abhängen, stellt die Auslegung der Halbleiter im Umrichter eine technische Herausforderung dar.

Um einen frühzeitigen und unkontrollierten Ausfall von Halbleitern zu vermeiden, können Verfahren zur Abschätzung ihrer Restlebensdauer eingesetzt werden.

Hierbei wird mithilfe eines thermischen Modells die Sperrschichttemperatur in Echtzeit berechnet und durch Speicherung von Temperaturhüben der Sperrschichttemperatur die Restlebensdauer bestimmt. Bei Unterschreiten einer bestimmten Restlebensdauer wird beispielsweise eine vorbeugende Wartungsmaßnahme eingeleitet.

Aufgrund der nicht immer vorhersagbaren Betriebsbedingungen und einer Vielzahl neuer Betriebsmodi in modernen Kraftfahrzeugen streut die Belastung durch aktive Temperaturhübe in Abhängigkeit vom jeweiligen Anwendungsfall (siehe oben) und dem Bordnetzbedarf mitunter stark (sogenannte streuende Feldbelastung). Hieraus resultieren ebenfalls stark streuende Restlebensdauern, die mit herkömmlichen Verfahren nicht immer zuverlässig abgeschätzt werden können, bzw. auf die auch bei korrekter Abschätzung nicht immer in zufriedenstellender Weise reagiert werden kann.

Es besteht daher der Bedarf nach verbesserten Möglichkeiten zum Betreiben von elektrifizierten Kraftfahrzeugen, beispielsweise von Hybrid- oder Elektrofahrzeugen (HEV, EV), die in ihrem Bordnetz entsprechende Halbleiterschalter aufweisen, und mittels derer ein zuverlässigerer Betrieb ohne unerwartete Ausfälle und Komforteinbußen ermöglicht wird.

Das Patentdokument DE 10 2007 035825 A1 offenbart (die Hinweise in Klammern beziehen sich auf dieses Dokument); Ein Verfahren zum Betreiben eines Halbleiterschalters (3) in einem elektrischen Kraftfahrzeugs, wobei der Halbleiterschalter (3) zeitweise im Überlast betrieben werden kann, wobei ferner zurückliegender Belastungsereignisse bei der Feststellung der Ist-Belastung verwendet werden (EVerlust_Alt).

Offenbarung der Erfindung

Die vorliegende Erfindung schlägt ein Verfahren zum Betreiben eines Kraftfahrzeugs mit einem Bordnetz, das wenigstens einen Halbleiterschalter aufweist, und Mittel zu dessen Implementierung mit den Merkmalen der unabhängigen Patentansprüche vor. Bevorzugte Ausgestaltungen sind Gegenstand der abhängigen Patentansprüche sowie der nachfolgenden Beschreibung.

Vorteile der Erfindung

Kern der Erfindung ist ein Verfahren, das es ermöglicht, auf die zuvor erwähnten stark streuenden Belastungen und die damit verbundenen, ebenfalls streuenden Ausfallzeitpunkte eines oder mehrerer Halbleiterschalter (nachfolgend auch kurz als Halbleiter bezeichnet) zu reagieren. Hierzu wird die tatsächlich auf den oder die Halbleiter aufgebrachte Belastung im Fahrzeug detektiert. Auf dieser Grundlage kann beispielsweise bei Erkennung einer überproportionalen Belastung eine Abregelungsstrategie zur Verschiebung des Ausfallzeitpunkts (d.h. durch eine Verringerung zukünftiger Belastungen) und/oder eine vorbeugende Wartungsmaßnahme eingeleitet werden.

Eine entsprechende Abregelungsstrategie kann dabei Abregelungsmaßnahmen umfassen, worunter im Rahmen dieser Anmeldung Maßnahmen verstanden werden, die in den Betrieb eines entsprechenden Fahrzeugs bzw.

eines oder mehrerer Halbleiter derart eingreifen, dass sich die Belastungen reduzieren.

Um Verfahren zur Bestimmung der Restlebensdauer eines oder mehrerer Halbleiter in einem elektrifizierten Kraftfahrzeug (HEV, EV) umsetzen zu können, sind eine Reihe von Randbedingungen bzw. Anforderungen zu erfüllen, die nachfolgend kurz zusammengefasst werden:

Aufgrund der Dynamik der Boost- und Rekuperationsvorgänge (bei denen kurzzeitige, hohe Ströme auftreten) sollte ein verwendetes thermisches Modell transiente Vorgänge möglichst exakt abbilden können. Ferner sollte eine Berechnung der Restlebensdauer auch dann möglich sein, wenn die Temperatur des Kühlmediums (beispielsweise eines Kühlkörpers oder einer Kühlflüssigkeit) nicht bekannt ist. Eine Berechnung sollte auch ohne Speicherung der Temperaturhübe möglich sein, da eine kosteneffiziente Implementierung im Steuergerät einen besonders geringen Speicherbedarf erfordert. Es sollte ferner frühzeitig erkannt werden können, dass eine überproportionale Belastung vorliegt, um rechtzeitig entsprechende Gegenmaßnahmen, z.B. die genannten Abregelungsmaßnahmen, einleiten und die Belastung reduzieren zu können. Die Nennlebensdauer sollte dabei ohne vorbeugende Wartungsmaßnahmen, d.h. beispielsweise nur durch die Abregelungsmaßnahmen erreicht werden können, um lästige Werkstattaufenthalte und damit Stillstandsphasen zu vermeiden.

Keines der bisher bekannten Verfahren erfüllt diese Anforderungen vollständig. Im Rahmen der vorliegenden Erfindung wird hingegen ein Verfahren vorgeschlagen, das in seinen Ausgestaltungen diese Anforderungen erfüllt und damit für den Einsatz in elektrifizierten Kraftfahrzeugen besonders vorteilhaft ist.

Das erfindungsgemäße Verfahren wird zum Betreiben eines elektrifizierten Kraftfahrzeugs (z.B. HEV, EV) mit einem elektrischen Bordnetz, das wenigstens einen Halbleiterschalter aufweist, eingesetzt. Wie erläutert, wird ein entsprechender Halbleiterschalter während des Betriebs des Kraftfahrzeugs aufgrund wenigstens eines belastungsbeeinflussenden Faktors, z.B. einer motorischen und/oder generatorischen Leistung einer elektrischen Maschine, die zu aktiven Temperaturhüben führt, mit Belastungsereignissen belastet.

Erfindungsgemäß wird dabei eine Lebensdauer-Belastungsbeziehung vorgegeben. Die Lebensdauer-Belastungsbeziehung gibt für eine Nennbelastung eines entsprechenden Halbleiterschalters eine Nennlebensdauer an. Wird der Halbleiterschalter über die Nennlebensdauer kontinuierlich oder im Mittel mit der Nennbelastung belastet, kann davon ausgegangen werden, dass er die Nennlebensdauer erreicht, also nicht vorzeitig ausfällt. Wird der Halbleiterschalter über die Nennlebensdauer kontinuierlich oder im Mittel mit einer geringeren als der Nennbelastung belastet, ist davon auszugehen, dass er die Nennlebensdauer überschreitet, er also erst geraume Zeit nach dem Ende der Nennlebensdauer ausfällt. Wird der Halbleiterschalter hingegen über die Nennlebensdauer kontinuierlich oder im Mittel mit einer höheren Belastung als der Nennbelastung belastet, kann davon ausgegangen werden, dass der Halbleiterschalter ggf. vor dem Ende der Nennlebensdauer ausfällt, er also seine Nennlebensdauer nicht erreicht. Es versteht sich, dass die Nennlebensdauer einen Sicherheitsfaktor umfassen kann, so dass sichergestellt werden kann, dass bei einer Exemplarstreuung auch negative Ausreißer nicht vor Ende der Nennlebensdauer ausfallen.

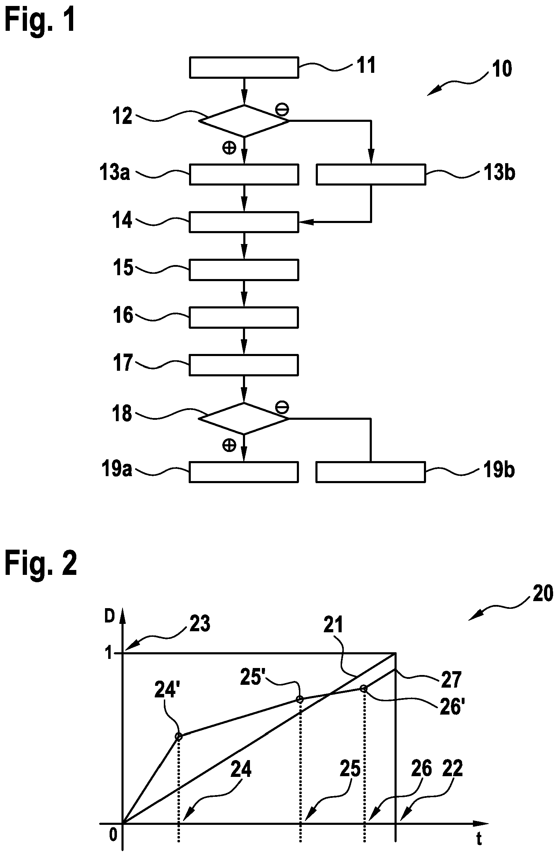

Bei der Lebensdauer-Belastungsbeziehung kann es sich beispielsweise um eine Lebensdauerkennlinie handeln. Aus der vorgegebenen Lebensdauer-Belastungsbeziehung, beispielsweise der Lebensdauerkennlinie, kann auch innerhalb der Nennlebensdauer zu unterschiedlichen Zeitpunkten ein zu diesen Zeitpunkten jeweils erlaubter Anteil der Nennbelastung (nachfolgend als Nennbelastungsanteil bezeichnet) ermittelt werden. Dies wird unter Bezugnahme auf Figur 2 näher erläutert. Beispielsweise kann zu einem Zeitpunkt, der 50% der Nennlebensdauer entspricht, ein entsprechender Anteil der Nennbelastung ermittelt werden. Bei einem linearen Verlauf einer Lebensdauerkennlinie beträgt der Nennbelastungsanteil hier ebenfalls 50%.

Erfindungsgemäß erfolgt ferner ein Ermitteln einer Istbelastung des wenigstens einen Halbleiterschalters auf Grundlage einer Feststellung zurückliegender Belastungsereignisse zu wenigstens einem Zeitpunkt. Anschließend oder gleichzeitig wird der dem wenigstens einen Zeitpunkt entsprechende Anteil der Nennbelastung mittels der vorgegebenen Lebensdauer-Belastungsbeziehung ermittelt, beispielsweise durch Ablesen aus einer Lebensdauerkennlinie oder durch Berechnen mittels einer der Lebensdauer-Belastungsbeziehung entsprechenden mathematischen Funktion.

Die Istbelastung und der Anteil der Nennbelastung zu dem wenigstens einen Zeitpunkt (letzterer beispielsweise aus einer Lebensdauerkennlinie) werden verglichen. Es erfolgt eine Reduzierung des wenigstens einen belastungsbeeinflussenden Faktors (z.B. in Form der genannten Abregelungsmaßnahmen), wenn die Istbelastung den Nennbelastungsanteil zu dem wenigstens einen Zeitpunkt um mehr als einen vorgegebenen Wert übersteigt.

Vorteilhafterweise werden zum Ermitteln der Istbelastung des wenigstens einen Halbleiterschalters zumindest eine Verlustleistung und zumindest ein Temperaturverlauf des wenigstens einen Halbleiterschalters sowie Temperaturhübe des Temperaturverlaufs bestimmt, wobei aus den Temperaturhüben mittels eines besonders vorteilhaften Verfahrens die Istbelastung abgeleitet wird.

Insbesondere die Verwendung einer Lebensdauerkennlinie auf Basis eines ermittelten Schädigungswerts (also eines Werts, der die Istbelastung kennzeichnet,) und der Nennlebensdauer ermöglicht eine frühzeitige Erkennung einer überproportionalen Istbelastung und damit den Einsatz gemäßigter Abregelungsmaßnahmen. Diese schränken den Fahrkomfort nicht übermäßig ein oder wirken sich nicht in übermäßig starker Weise auf weitere Fahrzeugkenngrößen wie Kraftstoffverbrauch und Abgaswerte aus, da sie frühzeitig zum Einsatz kommen.

Im Rahmen der vorliegenden Erfindung kann zeitabhängig auf die genannte Lebensdauer-Belastungsbeziehung, beispielsweise eine Lebensdauerkennlinie, geregelt werden. Dies ist ein großer Vorteil gegenüber bekannten Abregelungsstrategien, die eine Abregelung auf Basis unterschrittener Restlebensdauern einleiten und damit zeitunabhängig sind. Mit anderen Worten wird in herkömmlichen Verfahren stets relativ spät im Lebenszyklus eines Halbleiters ein starker Eingriff vorgenommen: Wird die für die Abregelungsmaßnahme definierte Restlebensdauer schon weit vor der Nennlebensdauer erreicht, und soll keine Wartungsmaßnahme durchgeführt werden, müssten harte Eingriffe in die Betriebsstrategie des Fahrzeugs erfolgen, die für den Fahrer spürbar sind.

Kern der Erfindung ist damit die Ermittlung der Istbelastung der Halbleiter im Fahrzeugbetrieb eines elektrifizierten Kraftfahrzeugs (HEV, EV) und die Verhinderung eines Ausfalls vor der Nennlebensdauer. Hierzu kann die streuende Feldbelastung durch Einleitung von Gegenmaßnahmen kompensiert werden, indem bei stärkerer Istbelastung als bei der Auslegung berücksichtigt eine Abregelung durch entsprechende Abregelungsmaßnahmen erfolgt. Die Zustandserkennung kann durch eine Onlineberechnung der Istbelastung erfolgen.

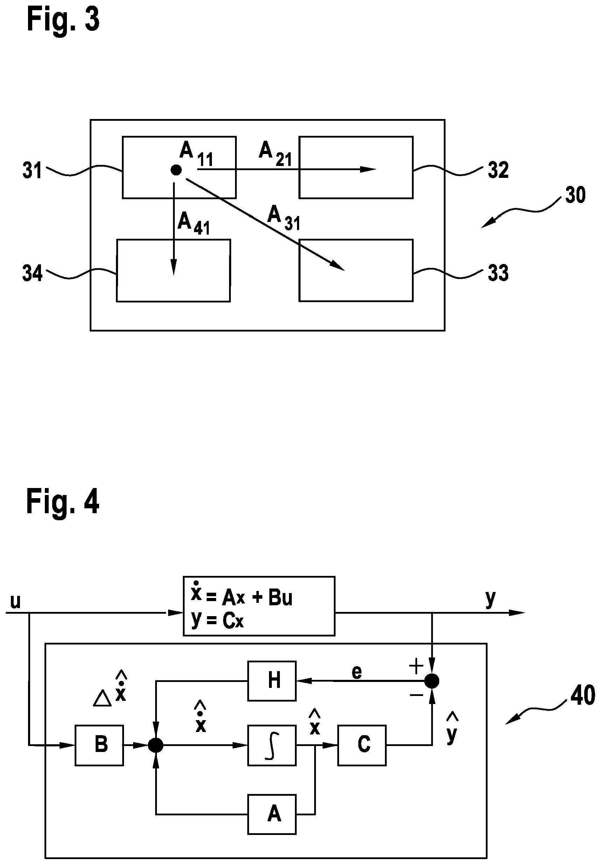

Mit anderen Worten wird im Rahmen der vorliegenden Erfindung frühzeitig eine Überbelastung eines Halbleiters erkannt. Dadurch wird ermöglicht, dass durch moderate Leistungsreduktion ein unkontrollierter Ausfall (Liegenbleiber) verhindert wird. Im Vergleich zum Stand der Technik werden dabei vorteilhafterweise Anpassungen durchgeführt, um eine Anwendung im Fahrzeugbetrieb zu ermöglichen und sämtliche eingangs genannten Anforderungen (exakte Abbildung transienter Vorgänge, Berechnung ohne Kenntnis einer Temperatur des Kühlmediums und ohne Speicherung der Temperaturhübe, frühzeitige Erkennung einer überproportionalen Belastung, Erreichen der Nennlebensdauer ohne vorbeugende Wartungsmaßnahmen) zu erfüllen. Diese vorteilhaften Anpassungen sind bevorzugte Ausführungsformen der vorliegenden Erfindung und werden im Rahmen der Figurenbeschreibung (Figuren 3 bis 7) ausführlich erläutert.

Eine erfindungsgemäße Recheneinheit, z.B. ein Steuergerät eines Kraftfahrzeugs, ist als Mittel zur Implementierung des erfindungsgemäßen Verfahrens, insbesondere programmtechnisch, dazu eingerichtet, ein erfindungsgemäßes Verfahren durchzuführen.

Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Kurze Beschreibung der Zeichnungen

Figur 1 zeigt ein Verfahren gemäß einer Ausführungsform der Erfindung in Form eines schematischen Ablaufplans.

Figur 2 veranschaulicht ein Verfahren gemäß einer Ausführungsform der Erfindung in Form eines Lebensdauerdiagramms.

Ausführungsform(en) der Erfindung

Figur 1 zeigt ein Verfahren gemäß einer besonders bevorzugten Ausführungsform der Erfindung in Form eines schematischen Ablaufplans. Das Verfahren ist insgesamt mit 10 bezeichnet.

Das Verfahren beginnt in einem Verfahrensschritt 11 mit der Bestimmung einer Verlustleistung. Zur Bestimmung der Verlustleistung sind grundsätzlich sämtliche Verfahren geeignet, die aus dem Stand der Technik bekannt sind.

Das Verfahren wird in einem Schritt 12 fortgeführt, in dem festgestellt wird, ob der verwendete Halbleiterschalter einen Temperatursensor an seinem Kühlmedium (beispielsweise einem Kühlkörper oder in einem Kühlwasser) aufweist. In tatsächlich in Kraftfahrzeugen implementierten Verfahren 10 ist dies bekannt, so dass auf diesen Entscheidungsschritt 12 verzichtet werden kann.

Ist ein entsprechender Temperatursensor vorgesehen, kann mittels einer Faltungsmethode in einem Schritt 13a, die beispielsweise die Online-Faltung der Verlustleistung mit der Aufwärmkurve bzw. eine Offline-Ermittlung von $R_{th}$-$C_{th}$-Parametern in einem Parameterschätzverfahren umfassen kann, bestimmt. Ist kein entsprechender Temperatursensor vorhanden, wird hingegen mittels eines Beobachtermodells in einem Schritt 13b ein entsprechender Temperaturverlauf bestimmt. Der bestimmte Temperaturverlauf steht in einem Schritt 14 zur Verfügung. Aus dem Temperaturverlauf erfolgt in einem Schritt 15 eine Bestimmung von Temperaturhüben, beispielsweise durch ein bekanntes Zählverfahren, das für den Schritt 15 in geeigneter Weise adaptiert wurde. Hierbei kann es sich beispielsweise um ein online-adaptiertes 4-Punkt-Rainflow-Verfahren handeln.

In einem Schritt 16 wird aus den ermittelten Temperaturhüben ein Schädigungsparameter bzw. eine Istbelastung des Halbleiterschalters ermittelt. Die Istbelastung wird in einem Schritt 17 mit der erläuterten Lebensdauer-Belastungsbeziehung, beispielsweise einer Lebensdauerkennlinie, verglichen.

In einem Schritt 18 wird festgestellt, ob aufgrund des Vergleichs die Istbelastung den Nennbelastungsanteil aus der Lebensdauer-Belastungsbeziehung um mehr als einen vorgegebenen Toleranzwert überschreitet. Ist dies der Fall, wird in einem Schritt 19a eine Betriebsstrategie angepasst, nämlich in Form einer Reduzierung des wenigstens einen belastungsbeeinflussenden Faktors bzw. in Form der erläuterten Abregelungsmaßnahmen. Überschreitet die Istbelastung den Nennbelastungsanteil, der aus der bekannten Lebensdauer-Belastungsbeziehung zu dem wenigstens einem Zeitpunkt abgeleitet wird, hingegen nicht oder zumindest nicht um mehr als den vorgegebenen Toleranzwert, wird die bestehende Betriebsstrategie beibehalten (Schritt 19b).Das Verfahren 10 wird zweckmäßigerweise mehrfach beim Betrieb des Kraftfahrzeugs wiederholt.

Das erfindungsgemäße Verfahren ist in Figur 2 anhand eines Lebensdauerdiagramms 20 weiter veranschaulicht. In dem Lebensdauerdiagramm 20 ist auf einer Abszisse eine Zeit t und auf einer Ordinate eine Belastung D aufgetragen. In dem Lebensdauerdiagramm 20 ist eine Belastungskennlinie 21 dargestellt, die, wie mehrfach erläutert, eine Lebensdauer-Belastungsbeziehung zwischen einer Nennlebensdauer, hier mit 22 bezeichnet und einer Nennbelastung, hier mit 23 bezeichnet, angibt. Bei der Nennlebensdauer 22 ist die maximal zulässige bzw. festgelegte Belastung eines entsprechenden Halbleiterschalters erreicht. Zwischen der maximalen Lebensdauer (Nennlebensdauer 22) und der maximalen Belastung (Nennbelastung 23) und dem jeweiligen Nullpunkt 0 beschreibt die Belastungskennlinie 21 im dargestellten Beispiel der Figur 2 einen linearen Verlauf. Belastungskennlinien können jedoch auch beispielsweise in Form von anderen mathematisch beschreibbaren Funktionen angegeben werden.

Das Lebensdauerdiagramm 20 zeigt drei unterschiedliche Zeitpunkte 24, 25 und 26. Eine tatsächliche Belastungskurve (Istbelastungskurve) ist mit 27 angegeben.

Zu dem Zeitpunkt 24 kann beispielsweise durch Ermitteln einer Istbelastung festgestellt werden, dass der entsprechende Belastungswert, hier mit 24' bezeichnet, oberhalb der Belastungskennlinie 21 liegt. Würde das Kraftfahrzeug bzw. der Halbleiterschalter eines entsprechenden Kraftfahrzeugs weiterhin mit einer entsprechenden Belastung betrieben, wäre damit zu rechnen, dass die tatsächliche Lebensdauer des Halbleiterschalters die Nennlebensdauer 22 nicht erreicht. Daher werden die bereits mehrfach erläuterten Abregelungsmaßnahmen eingeleitet.

Wird anschließend zu einem zweiten Zeitpunkt 25 erneut eine Istbelastung des Halbleiterschalters bestimmt - ein entsprechender Punkt ist hier mit 25' bezeichnet -, kann festgestellt werden, dass sich dieser Punkt nun näher an die Lebensdauerkennlinie annähert. Zu dem Zeitpunkt 25 wird die Betriebsstrategie jedoch nicht in Form einer weiteren Abregelung geändert, da bei weiterer Belastung mit den entsprechenden belastungsbeeinflussenden Faktoren, die zu dem Verlauf zwischen den Punkten 24' und 25' geführt haben, eine ausreichende Lebensdauer, d.h. ein Erreichen der Nennlebensdauer, ermöglicht würde.

Vom Zeitpunkt 0 bis zum Zeitpunkt 25 werde im dargestellten Beispiel ein entsprechendes Fahrzeug von einem ersten Fahrer bedient. Dieser Fahrer beansprucht den Halbleiterschalter in überproportional hoher Weise. Zum Zeitpunkt 25 findet ein Fahrerwechsel statt. Der nun das Fahrzeug bedienende zweite Fahrer belastet den Halbleiterschalter in unterdurchschnittlicher Weise. Hierdurch kommt es, ohne dass die Betriebsstrategie weiter verändert würde, zu einem Unterschreiten der Lebensdauerkennlinie 21 bei einem Zeitpunkt 26'. Aufgrund dieser Unterschreitung kann die zuvor vorgenommene Abregelung der belastungsbeeinflussenden Faktoren wieder aufgehoben werden.

Wie eingangs erwähnt, werden in Ausführungsformen der Erfindung Anpassungen vorgeschlagen, die eine besonders vorteilhafte Anwendung im Fahrzeugbetrieb ermöglichen und die eingangs genannten Anforderungen (exakte Abbildung transienter Vorgänge, Berechnung ohne Kenntnis einer Temperatur des Kühlmediums und ohne Speicherung der Temperaturhübe, frühzeitige Erkennung einer überproportionalen Belastung, Erreichen der Nennlebensdauer ohne vorbeugende Wartungsmaßnahmen) erfüllen. Diese werden nachfolgend erläutert.

Die exakte Abbildung von transienten Vorgängen ist, wie eingangs erläutert, zur Anwendung im Fahrzeugbetrieb besonders vorteilhaft.

Insbesondere Rekuperations- und Boostvorgänge, also belastungsbeeinflussende Faktoren, finden im Verhältnis zur Betriebszeit nur in kurzen Zeitabschnitten statt. Daher wird selten ein thermisch eingeschwungener Zustand erreicht. Um trotzdem eine genaue Berechnung gewährleisten zu können, müssen zusätzlich zu den thermischen Widerständen auch die thermischen Kapazitäten exakt nachgebildet werden. Hierzu kann beispielsweise ein Cauer-Modell oder ein Foster-Modell (vgl. beispielsweise AN2008-03: Thermische Ersatzschaltbilder, Infineon Technologies AG 2008, Bilder 1 und 2) zum Einsatz kommen. Hierdurch lassen sich übergroße Fehler bei der Berechnung der Sperrschichttemperatur vermeiden. Durch die Nichtlinearität des Schädigungsmodells (Steigung der Wöhlerlinie im Bereich von k = 5) lassen sich ebenfalls größere Fehler bei der Bestimmung der verbrauchten Lebensdauer (also der Istbelastung) reduzieren.

Es hat sich herausgestellt, dass ein reines $R_{th}$-Modell beispielsweise im Vergleich zum (physikalisch korrekten) thermischen Cauer-Modell die Temperaturhübe deutlich überschätzt. Dies ist darauf zurückzuführen, dass in ersterem vernachlässigt wird, dass sich die thermischen Massen erst langsam erwärmen. Damit müssten Abregelungsmaßnahmen ggf. unnötig früh eingeleitet werden.

Aus demselben Grund wird zur Ermittlung des thermischen Modells vorteilhafterweise die Faltungsmethode eingesetzt, die im Gegensatz zu einem thermischen Modell auf Basis der Wärmespreizung eine dreidimensionale Wärmeabgabe im Raum berücksichtigt. Die Wärmespreizung geht von einem eindimensionalen Wärmepfad vom Chip des Halbleiterschalters zu dessen Kühlkörper aus und berechnet somit die Sperrschichttemperatur zu konservativ.

Bei der Faltung wird ein Verlustleistungsverlauf verwendet. Mit den hierbei ermittelten $Z_{th}$-Funktionen wird ein Temperaturdelta zwischen Sperrschicht und Kühlmedium ermittelt. Ist die Temperatur des Kühlmediums bekannt, kann somit die Sperrschichttemperatur bestimmt werden.

Betrachtet man die thermische Impedanz systemtheoretisch, stellt diese eine Übertragungsfunktion zwischen einem Eingangssignal und einem Ausgangssignal dar. Eingangssignal ist hierbei die Verlustleistung, Ausgangssignal das sich ergebende Temperatursignal:

$$Z_{th}(p) = \frac{Y(p)}{X(p)} = \frac{L\{\Delta\vartheta(t)\}}{L\{P_v\}}$$

$Z_{th}(t)$ stellt damit die Systemantwort auf einen Dirac-Stoß dar. Mathematisch ist dies äquivalent zur Ableitung der Sprungantwort. Es lässt sich zeigen, dass der sich ergebende Temperaturverlauf wie folgt berechnet werden kann:

$$T(t) = T_0 + \int_0^t \dot{A}(t - \tau)P(\tau)d\tau$$

Dabei stellt $T_0$ die Kühlmitteltemperatur und A(t) die Sprungantwort dar. Diese kann experimentell oder mittels einer FEM-Simulation (wie im Rahmen der vorliegenden Erfindung vorteilhafterweise vorgesehen) mit ausreichender Genauigkeit ermittelt werden.

Um den Temperaturverlauf zu ermitteln, wird der sich ergebende Temperaturverlauf um die Temperatur des Kühlmediums verschoben. Bei mehreren Chips auf einem Modul muss auch die Überlagerung der thermischen Quellen berücksichtigt werden. Hierfür werden die Temperaturen, die durch N Wärmequellen in Form der Chips induziert werden, aufsummiert. Dabei ist die Temperatur $T_0$ des Kühlmediums für alle Module identisch:

$$Ti(t) = T_0 + \sum_{i=1}^{N} \int_0^t \dot{A}_{iJ}(t - \tau)P(\tau)d\tau$$

Dargestellt in Matrixform entspricht dies (bei m untersuchten Temperaturstellen und n Wärmequellen):

$$\begin{matrix} \Delta T_1 \\ \Delta T_2 \\ \Delta T_m \end{matrix} = \begin{bmatrix} \dot{A}11 & \dot{A}12 & \dot{A}1N \\ \dot{A}21 & \dot{A}22 & \dot{A}2N \\ \dot{A}M1 & \dot{A}M2 & \dot{A}MM \end{bmatrix} * \begin{bmatrix} P_1 \\ P_2 \\ P_n \end{bmatrix}$$

Figur 3 zeigt dabei die Bedeutung der Matrix-Koeffizienten. Es ist ein Halbleitermodul 30 dargestellt, das vier Halbleiter 31 bis 34 trägt.

$A_{11}$ beschreibt die Temperatur-Sprungantwort am Ort des Leistungseintrags (hier Halbleiter 31), während $A_{21}$ beschreibt, wie sich Halbleiter 32 durch einen Leistungssprung an Halbleiter 31 erwärmt. Entsprechendes gilt für $A_{31}$

und $A_{41}$. Somit wird sowohl eine dreidimensionale Wärmeausbreitung als auch die Wechselwirkung zwischen den Halbleitern eines Leistungsmoduls beschrieben.

Falls die Faltung im Steuergerät zu viel Rechenzeit benötigt, kann in einer alternativen Ausführungsform die Aufwärmkurve durch ein Parameterschätzverfahren angenähert und ein thermisches Ersatzschaltbild in Form eines Cauer- oder Fostermodells abgeleitet werden.

Auch die Berechnung ohne bekannte Kühlmitteltemperatur (Kühlkörper bzw. Kühlwasser) ist, wie eingangs erläutert, zur Anwendung im Fahrzeugbetrieb besonders vorteilhaft.

Falls die Kühlmitteltemperatur unbekannt ist, kann ein sogenannter Beobachter eingesetzt werden, der in Figur 4 schematisch dargestellt und insgesamt mit 40 bezeichnet ist. Das hierbei verwendete Parameterschätzverfahren basiert ebenfalls auf der Faltungsmethode. Bei diesem Verfahren werden die Matrizen des Beobachters offline in einem FEM-Modell ermittelt. Dabei muss die Ordnung des Beobachters ausreichend hoch sein, um die Aufwärmkurven ausreichend genau im Modell nachbilden zu können. Beobachter werden eingesetzt, wenn innere Zustandsvariablen nicht direkt messbar, aber relevant sind. Aus den dynamischen Zusammenhängen von Ein- und Ausgangsgrößen werden über ein System von Differentialgleichungen (Modell) die inneren Zustände rekonstruiert. Das abgeleitete Modell wird parallel zum realen System in Software simuliert. Im Fall eines perfekten Modells stimmen die rekonstruierten (beobachteten, hier z.B. Sensortemperaturen) Zustände exakt mit den realen überein.

Da dies in der Praxis aber nicht der Fall ist, werden die rekonstruierten Messgrößen mit den gemessenen verglichen und, analog zu einem Regelentwurf, in das Beobachtersystem zurückgeführt. In dem vorliegenden Fall sind die berechneten Verlustleistungen als Eingangsgrößen und die gemessenen Temperaturen der Sensoren im Halbleitermodul als Ausgangsgrößen gegeben. Von entscheidender Wichtigkeit für die Abregelung sind jedoch die Halbleitertemperaturen, die als innere Zustandsgrößen modelliert sind und somit im Beobachtersystem rekonstruiert werden. Dabei ist zu beachten, dass das aufgestellte Modell das regelungstechnische Kriterium der Beobachtbarkeit erfüllt. Über die Abweichung zwischen simulierten und gemessenen Sensorwerten kann eine Abschätzung der Kühlmitteltemperatur erfolgen und es können Störungen im Kühlmedium erkannt werden. Auch die Berechnung ohne Speicherung der Temperaturhübe ist, wie eingangs erläutert, zur Anwendung im Fahrzeugbetrieb besonders vorteilhaft.

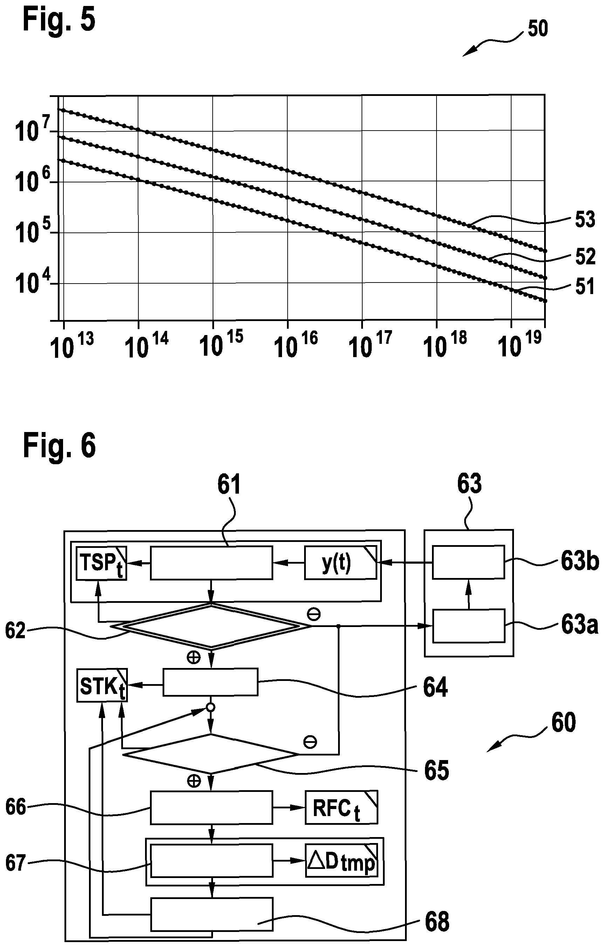

In Lebensdauerversuchen werden hierzu, wie in Figur 5 schematisch dargestellt und mit 50 bezeichnet, Wöhlerlinien 51 bis 53 auf Basis von Temperaturhüben und mittleren Temperaturen ermittelt. Jeder Temperaturhub entspricht einer Spannungs-Dehnungs-Hysterese in der Werkstoffschicht, die aufgrund des thermischen Mismatchs der in der Aufbau- und Verbindungstechnik verwendeten Materialien entsteht. Somit entsprechen der Betrag des Temperaturhubs einer in der Verbindungstechnik eingeprägten Energie und die mittlere Temperatur des Hubs der Mittelspannung.

Um das stochastische Temperatursignal hinsichtlich der verbrauchten Lebensdauer (also einer Istbelastung) bewerten und die lineare Schadensakkumulation verwenden zu können, muss dieses in einzelne Hübe zerlegt werden. Jeder Hub entspricht einer Spannungs-Dehnungs-Hysterese und damit einer eingebrachten Energie. Damit ist die Bedingung zur Verwendung der linearen Schadensakkumulation erfüllt, die davon ausgeht, dass jedes Bauteil eine ertragbare Brucharbeit besitzt, die bis zum vollständigen Versagen eingeprägt werden kann. Bis zur Grenzbedingung der Beanspruchbarkeit, wenn die aufgenommene Energie der aufnehmbaren Energie entspricht und damit ein Schädigungswert, hier mit D bezeichnet, einen Wert von 1 annimmt, werden die Teilenergien aufsummiert.

Eine vollständige Hysterese entsteht erst, wenn die Spannung und somit die Temperatur wieder den Ausgangsbetrag annimmt. Daher wird auch für die Lebensdauerbestimmung von Halbleitern bei der Klassierung von Temperaturhüben vorteilhafterweise die Rainflow-Zählung (wie in der Betriebsfestigkeit Stand der Technik) verwendet, die nur vollständige Hübe zählt. Es können somit aus der Werkstoffkunde bekannte Rainflow-Verfahren zur Zählung von Spannungs-Dehnungs-Hysteresen zur Zählung von Temperaturhüben angewandt werden.

Für den im Rahmen dieser Anmeldung vorgeschlagenen Einsatz werden an die Rainflow-Zählung und an die anschließende Schädigungsberechnung zwei Hauptanforderungen gestellt. Da (1) eine vollständige Speicherung der Temperaturhübe in einer Rainflow-Matrix über die gesamte Lebensdauer im Steuergerät zu hohen Kosten führen würde, soll das verwendete Verfahren auf eine Speicherung dieser Daten verzichten. Weiterhin beinhaltet (2) die vorliegende Anmeldung einen regelnden Eingriff in belastungsbeeinflussende Faktoren, beispielsweise in das System des Umrichters. Die Regelgröße ist hierbei der aktuelle Schädigungswert D, welcher im Sinne einer Regelung während des Betriebs, d.h. online, bereitgestellt werden muss.

Zur Erfüllung dieser Anforderungen eignet sich die sogenannte Online-Schädigungsberechnung. Dieses für mechanische Spannungen entwickelte Verfahren kann aufgrund der oben beschriebenen Analogie zu den Temperaturhüben ebenfalls für die direkte Zählung von Temperaturhüben angewandt werden. Im Folgenden wird das Verfahren allgemein beschrieben.

Grundidee des Verfahrens ist eine Rainflow-Zählung der dynamischen Beanspruchung während des Systembetriebs mit Hilfe eines onlinefähigen 4-Punkte-Algorithmus. Vollständige Beanspruchungshysteresen, die dabei detektiert werden, können unmittelbar mit Hilfe einer Wöhlerlinie in einen Schädigungsbeitrag umgerechnet werden. Dieser wird zur bis dato vorhandenen Gesamtschädigung hinzuaddiert. Auf diese Weise ist es möglich bei geringem Speicherbedarf, online einen Schädigungswert zu bestimmen und weiterzuverwenden.

Das zur Online-Schädigungsberechnung verwendete Verfahren ist in Figur 6 skizziert und insgesamt mit 60 bezeichnet. Dieses Vorgehen entspricht in der Betriebsfestigkeit teilweise dem Stand der Technik. Aus oben genannten Gründen kann es für die Zählung von Temperaturhüben adaptiert werden. Die erfindungsgemäß verwendbaren Adaptionen sind veranschaulicht.

In einem Schritt 61 erfolgt eine Aktualisierung von Signalwerten. In einem Schritt 62 wird auf dieser Grundlage eine Prüfung auf einen Umkehrpunkt vorgenommen. Wird kein derartiger Umkehrpunkt detektiert, erfolgt in Schritt 63 eine Fortsetzung der Sperrschicht-Temperatursimulation und eine Bereitstellung 63b eines Temperaturwerts. Wird in Schritt 62 ein Umkehrpunkt detektiert, schreitet das Verfahren mit einem Schritt 64 fort, in dem ein Stack aktualisiert wird.

In einem nächsten Schritt 65 erfolgt eine Überprüfung auf ein Schwingspiel. Ist diese positiv, wird Schritt 66 ausgeführt, falls nicht, wird das Verfahren wie oben mit Schritt 63 fortgesetzt.

In den Schritten 66 bis 68 erfolgen eine Speicherung des Schwingspiels und anschließend eine Schädigungsberechnung. Am Ende wird das Schwingspiel aus dem Stack gelöscht und dieser für einen neuen Zyklus freigegeben.

Insbesondere der Schritt 67 stellt eine vorteilhafte Erweiterung zu bekannten Verfahren dar, die für einen Einsatz im Kraftfahrzeug geeignet sind.

Die Online-Schädigungsberechnung arbeitet auf Basis eines Beanspruchungssignals $y(t)$. Im vorliegenden Fall wird hierfür der beobachtete Temperaturverlauf herangezogen, es gilt $y(t) = T(t)$. Der aktuell beobachtete Temperaturverlauf wird eingelesen und zusammen mit den zwei vorher beobachteten Signalwerten in einer Menge $TSP_t$ (TSP = Three Signal Points) gespeichert (vgl. Schritt 61). Der Inhalt der Menge $TSP_t$ variiert mit der Zeit.

Mit einem Vorzeichenvergleich lässt sich prüfen, ob der mittlere Wert in $TSP_t$ ein Umkehrpunkt im Signal war. Wird ein Umkehrpunkt im Signal detektiert (vgl. Schritt 62), kann dieser Wert in den Stack $STK_t$ des Verfahrens übernommen werden (vgl. Schritt 64). Der aktualisierte Stack $STK_t$ kann mittels bekannter Verfahren nach vollständigen Schwingspielen durchsucht werden (vgl. Schritt 65). Es resultieren eine temporäre Matrix der Rainflow-Zyklen $RFC_{tmp}$ und ein temporäres Residuum $RES_{tmp}$. Falls sich aus der aktuellen Beobachtung neue Schwingspiele ergeben, gilt $RFC_{tmp} \neq \{\}$. Die eigentliche Matrix der Rainflow-Zyklen $RFC_t$ und der Stack $STK_t$ können in diesem Fall aktualisiert werden (vgl. Schritt 66). Für die hinzukommenden Schwingspiele in $RFC_{tmp}$ kann dann aus einem Vergleich mit der Wöhlerlinie unmittelbar ein Schädigungsbeitrag $\Delta D_{tmp}(t)$ berechnet werden (Schritt 67). Diese temporäre Schädigung darf zur aktuell vorhandenen Gesamtschädigung $D(t)$ hinzu addiert werden. Somit ist eine Vorgehensweise aufgezeigt, die effizient einem Signal $y(t)$ einen Schädigungswert $D(t)$ zuordnen kann. Der Schädigungswert $D(t)$ ist immer eine treppenförmige, monoton wachsende Funktion. Ihr Wert charakterisiert die bis dato aufgetretene Gesamtschädigung, also die Istbelastung.

Auf die Speicherung der Matrix der Rainflow-Zyklen $RFC_t$ kann optional auch verzichtet werden. Die Online-Schädigungsberechnung konnte mittels konventioneller Verfahren und Programmen zur Rainflow-Zählung und zur Schädigungsberechnung verifiziert werden.

Im Gegensatz zu den bekannten Verfahren wird im Rahmen der vorliegenden Erfindung vorteilhafterweise nicht erst nach Unterschreitung einer Restlebensdauer eine Maßnahme eingeleitet, sondern frühzeitig bei Erkennung einer überproportionalen Schädigung. Damit ist die zulässige Restlebensdauer eine Funktion der bisherigen bzw. verbleibenden Betriebszeit. Je früher eine überproportionale Schädigung erkannt wird, desto weniger stark muss beispielsweise die generatorische und/oder motorische Leistung des HEV/EV eingeschränkt werden, um dennoch die geforderte Nennlebensdauer zu erreichen.

Die Istkurve eines Schädigungswerts D kann dabei über die Online-Schädigungsberechnung ermittelt werden. Sobald im Stack der abgelegten Extremwerte ein Temperaturhub identifiziert wird, wird der Schädigungsanteil dieses Hubs hinzu addiert. Es handelt sich also um eine kontinuierlich ermittelte Istbelastung.

Diese Istkurve kann mit einer Lebensdauerkennlinie verglichen werden, so dass eine entsprechende Trajektorie des individuellen Fahrers erkannt werden kann. Hierbei können Toleranzlinien verwendet werden, die sich zum Ende der geforderten Lebensdauer immer weiter annähern können, da sich die zur Verfügung stehende Zeit zur Ergreifung von Gegenmaßnahmen reduziert. Ein entsprechender Toleranzwert kann also auf Grundlage einer zeitlichen Lage des wenigstens einen Zeitpunkts der Bestimmung der Istbelastung innerhalb der Nennlebensdauer vorgegeben werden. Belastet der Fahrer das Bauteil stärker als in der Auslegung berücksichtigt, befindet sich die Trajektorie oberhalb der Sollkennlinie. Andernfalls befindet sie sich unterhalb. Verlässt die Trajektorie die Toleranzgrenzen, sind Gegenmaßnahmen einzuleiten.

In HEV/EV-Anwendungen ergibt sich damit die Möglichkeit, über den Einfluss der Betriebsstrategie auf die Lebensdauer der Halbleiter auch ohne vorbeugende Wartungsmaßnahme die Nennlebensdauer zu erreichen. Hierfür wird in Extremfällen eine andere Betriebsstrategie eingestellt. Mithilfe eines Betriebsstrategie-Wechsels kann auf die Lebensdauerkennlinie geregelt werden. Je mehr Betriebsstrategien zur Verfügung stehen, desto feiner aufgelöst kann geregelt werden. Hierbei kann im Extremfall eine kontinuierliche Regelung, z.B. mithilfe der Rekuperationleistung, auf eine entsprechende Lebensdauerkennlinie erfolgen.

**EP 2 964 480 B1**

**Patentansprüche**

1. Verfahren (10) zum Betreiben eines Kraftfahrzeugs mit einem elektrischen Bordnetz, das wenigstens einen Halbleiterschalter aufweist, der während des Betriebs des Kraftfahrzeugs aufgrund wenigstens eines belastungsbeeinflussenden Faktors mit Belastungsereignissen belastet wird, und für welchen eine Lebensdauer-Belastungsbeziehung (21) vorgegeben wird, die für eine Nennbelastung (23) eine Nennlebensdauer (22) angibt, und mittels derer für wenigstens einen Zeitpunkt (24-26) innerhalb der Nennlebensdauer (22) ein dem wenigstens einen Zeitpunkt (24-26) entsprechender Nennbelastungsanteil ermittelbar ist, und wobei das Verfahren (10) für den wenigstens einen Zeitpunkt (24-26) umfasst:

   Ermitteln (11-16) einer Istbelastung des wenigstens einen Halbleiterschalters auf Grundlage einer Feststellung zurückliegender Belastungsereignisse zu dem wenigstens einen Zeitpunkt (24-26),
   Ermitteln des dem wenigstens einen Zeitpunkt (24-26) entsprechenden Nennbelastungsanteils mittels der vorgegebenen Lebensdauer-Belastungsbeziehung (21),
   Vergleichen (17) der Istbelastung und des Nennbelastungsanteils zu dem wenigstens einen Zeitpunkt und Reduzieren des wenigstens einen belastungsbeeinflussenden Faktors, wenn die Istbelastung den Nennbelastungsanteil zu dem wenigstens einen Zeitpunkt (24-26) um mehr als einen vorgegebenen Toleranzwert übersteigt, **dadurch gekennzeichnet dass** der Toleranzwert auf Grundlage einer zeitlichen Lage des wenigstens einen Zeitpunkts (24-26) innerhalb der Nennlebensdauer (22) vorgegeben wird.

2. Verfahren (10) nach Anspruch 1, bei dem zum Ermitteln (11-16) der Istbelastung zumindest eine Verlustleistung und zumindest ein Temperaturverlauf des wenigstens einen Halbleiterschalters sowie Temperaturhübe des Temperaturverlaufs bestimmt werden (13a, 13b, 14, 15), wobei aus den bestimmten Temperaturhüben die Istbelastung abgeleitet (16) wird.

3. Verfahren (10) nach Anspruch 2, bei dem zum Bestimmen (13a, 14) des Temperaturverlaufs des wenigstens einen Halbleiterschalters zumindest ein Wert eines Temperatursensors in oder an einem Kühlmedium des wenigstens einen Halbleiterschalters verwendet wird.

4. Verfahren (10) nach Anspruch 3, bei dem der Temperaturverlauf des wenigstens einen Halbleiterschalters aus dem zumindest einen Wert des Temperatursensors mittels eines Faltungsverfahrens und/oder eines thermischen Modells ermittelt wird.

5. Verfahren (10) nach Anspruch 2, bei dem zum Bestimmen (13b, 14) des Temperaturverlaufs des wenigstens einen Halbleiterschalters zumindest ein Beobachtermodell (40) verwendet wird.

6. Verfahren (10) nach einem der Ansprüche 2 bis 65 bei dem zum Bestimmen (15) der Temperaturhübe des Temperaturverlaufs ein Online-Rainflow-Verfahren (60) verwendet wird.

7. Verfahren (10) nach einem der vorstehenden Ansprüche, das zumindest zu einem ersten Zeitpunkt (24, 25) und zu einem zweiten Zeitpunkt (26) durchgeführt wird, und bei dem, wenn der wenigstens eine belastungsbeeinflussende Faktor zu dem ersten Zeitpunkt (24) reduziert wird, weil die Istbelastung den Nennbelastungsanteil zu dem ersten Zeitpunkt (24) um mehr als den vorgegebenen Toleranzwert zu dem ersten Zeitpunkt (24) übersteigt, der wenigstens eine belastungsbeeinflussende Faktor zu dem zweiten Zeitpunkt (26) erhöht wird, wenn die Istbelastung den Nennbelastungsanteil zu dem zweiten Zeitpunkt (26) nicht um mehr als den vorgegebenen Toleranzwert zu dem zweiten Zeitpunkt (26) übersteigt.

8. Verfahren (10) nach einem der vorstehenden Ansprüche, bei dem der wenigstens eine belastungsbeeinflussende Faktor eine generatorische und/oder motorische Leistung einer elektrischen Maschine in dem Bordnetz mit dem wenigstens einen Halbleiterschalter umfasst.

9. Verfahren (10) nach einem der vorstehenden Ansprüche, bei dem die Lebensdauer-Belastungsbeziehung in Form einer Belastungskennlinie (21) vorgegeben wird.

10. Recheneinheit, die dazu eingerichtet ist, ein Verfahren nach einem der vorstehenden Ansprüche durchzuführen.

11. Computerprogramm, welches eingerichtet ist, alle Schritte des Verfahrens nach einem der Ansprüche 1 bis 9 durchzuführen.

9

**12.** Maschinenlesbares Speichermedium mit einem darauf gespeicherten Computerprogramm nach Anspruch 11.

**Claims**

1. Method (10) for operating a motor vehicle with an on-board electrical network which has at least one semiconductor switch which is loaded with loading events on account of at least one loading-influencing factor during the operation of the motor vehicle and for which a lifetime-loading relationship (21) is predefined, which specifies a nominal lifetime (22) for a nominal loading (23) and by means of which for at least one point in time (24-26) within the nominal lifetime (22) a nominal loading portion corresponding to the at least one point in time (24-26) is determinable, and wherein the method (10) comprises for the at least one point in time (24-26):

   determining (11-16) an actual loading of the at least one semiconductor switch on the basis of an ascertainment of previous loading events at the at least one point in time (24-26),
   determining the nominal loading portion corresponding to the at least one point in time (24-26) by means of the predefined lifetime-loading relationship (21),
   comparing (17) the actual loading and the nominal loading portion at the at least one point in time and reducing the at least one loading-influencing factor if the actual loading exceeds the nominal loading portion at the at least one point in time (24-26) by more than a predefined tolerance value, **characterized in that** the tolerance value is predefined on the basis of a temporal position of the at least one point in time (24-26) within the nominal lifetime (22).

2. Method (10) according to Claim 1, wherein at least one power loss and at least one temperature profile of the at least one semiconductor switch and also temperature swings of the temperature profile are ascertained (13a, 13b, 14 and 15) for the purpose of determining (11-16) the actual loading, wherein the actual loading is derived (16) from the ascertained temperature swings.

3. Method (10) according to Claim 2, wherein at least one value of a temperature sensor in or on a cooling medium of the at least one semiconductor switch is used for ascertaining (13a, 14) the temperature profile of the at least one semiconductor switch.

4. Method (10) according to Claim 3, wherein the temperature profile of the at least one semiconductor switch is determined from the at least one value of the temperature sensor by means of a convolution method and/or a thermal model.

5. Method (10) according to Claim 2, wherein at least one observer model (40) is used for ascertaining (13b, 14) the temperature profile of the at least one semiconductor switch.

6. Method (10) according to any of Claims 2 to 5, wherein an online rain flow method (60) is used for ascertaining (15) the temperature swings of the temperature profile.

7. Method (10) according to any of the preceding claims, which is carried out at least at a first point in time (24, 25) and at a second point in time (26), and wherein, if the at least one loading-influencing factor is reduced at the first point in time (24) because the actual loading exceeds the nominal loading portion at the first point in time (24) by more than the predefined tolerance value at the first point in time (24), the at least one loading-influencing factor is increased at the second point in time (26) if the actual loading does not exceed the nominal loading portion at the second point in time (26) by more than the predefined tolerance value at the second point in time (26).

8. Method (10) according to any of the preceding claims, wherein the at least one loading-influencing factor comprises a generator power and/or motor power of an electric machine in the on-board network with the at least one semiconductor switch.

9. Method (10) according to any of the preceding claims, wherein the lifetime-loading relationship is predefined in the form of a loading characteristic curve (21).

10. Computing unit configured to carry out a method according to any of the preceding claims.

11. Computer program configured to carry out all the steps of the method according to any of Claims 1 to 9.

**12.** Machine-readable storage medium with a computer program according to Claim 11 stored thereon.

**Revendications**

**1.** Procédé (10) pour faire fonctionner un véhicule automobile doté d'un réseau électrique de bord, lequel possède au moins un commutateur à semiconducteur, lequel est chargé avec des événements de charge pendant le fonctionnement du véhicule automobile en raison d'au moins un facteur influençant la charge, et pour lequel est prédéfinie une relation durée de vie-charge (21) qui indique une durée de vie nominale (22) pour une charge nominale (23), et au moyen duquel peut être déterminée, pour au moins un instant (24-26) à l'intérieur de la durée de vie nominale (22), une part de charge nominale correspondant à l'au moins un instant (24-26), et le procédé (10), pour l'au moins un instant (24-26), comprenant les étapes suivantes :

détermination (11-16) d'une charge réelle de l'au moins un commutateur à semiconducteur sur la base d'une constatation des événements de charge antérieurs à l'au moins un instant (24-26),
détermination de la part de charge nominale correspondant à l'au moins un instant (24-26) au moyen de la relation durée de vie-charge (21) prédéfinie,
comparaison (17) de la charge réelle et de la part de charge nominale à l'au moins un instant et réduction de l'au moins un facteur influençant la charge lorsque la charge réelle dépasse la part de charge nominale à l'au moins un instant (24-26) de plus d'une valeur de tolérance prédéfinie,
**caractérisé en ce que** la valeur de tolérance est prédéfinie sur la base d'une position dans le temps de l'au moins un instant (24-26) à l'intérieur de la durée de vie nominale (22).

**2.** Procédé (10) selon la revendication 1, avec lequel au moins une perte de puissance et au moins une courbe de température de l'au moins un commutateur à semiconducteur ainsi que les excursions de température de la courbe de température sont définies (13a, 13b, 14, 15) pour la détermination (11-16) de la charge réelle, la charge réelle étant dérivée (16) des excursions de température définies.

**3.** Procédé (10) selon la revendication 2, avec lequel au moins une valeur d'une sonde de température dans ou sur un fluide de refroidissement de l'au moins un commutateur à semiconducteur est utilisée pour la définition (13a, 14) de la courbe de température de l'au moins un commutateur à semiconducteur.

**4.** Procédé (10) selon la revendication 3, avec lequel la courbe de température de l'au moins un commutateur à semiconducteur est déterminée à partir de l'au moins une valeur de la sonde de température au moyen d'un procédé de convolution et/ou d'un modèle thermique.

**5.** Procédé (10) selon la revendication 2, avec lequel au moins un modèle d'observateur (40) est utilisé pour la définition (13b, 14) de la courbe de température de l'au moins un commutateur à semiconducteur.

**6.** Procédé (10) selon l'une des revendications 2 à 5, avec lequel un procédé de Rainflow en ligne (60) est utilisé pour la définition (15) des excursions de température de la courbe de température.

**7.** Procédé (10) selon l'une des revendications précédentes, lequel est mis en oeuvre au moins à un premier instant (24, 25) et à un deuxième instant (26) et avec lequel, lorsque l'au moins un facteur influençant la chargé est réduit au premier instant (24) parce que la charge réelle dépasse la part de charge nominale au premier instant (24) de plus de la valeur de tolérance prédéfinie au premier instant (24), l'au moins un facteur influençant la charge est augmenté au deuxième instant (26) lorsque la charge réelle ne dépasse pas la part de charge nominale au deuxième instant (26) de plus de la valeur de tolérance prédéfinie au deuxième instant (26).

**8.** Procédé (10) selon l'une des revendications précédentes, avec lequel l'au moins un facteur influençant la charge comprend une puissance de générateur et/ou de moteur d'une machine électrique dans le réseau de bord comprenant l'au moins un commutateur à semiconducteur.

**9.** Procédé (10) selon l'une des revendications précédentes, avec lequel la relation durée de vie-charge est prédéfinie sous la forme d'une courbe caractéristique de charge (21).

**10.** Unité de calcul qui est conçue pour mettre en oeuvre un procédé selon l'une des revendications précédentes.

**11.** Programme informatique qui est conçu pour exécuter toutes les étapes du procédé selon l'une des revendications 1 à 9.

**12.** Support d'enregistrement lisible par machine sur lequel est enregistré un programme informatique selon la revendication 11.

## Fig. 1

## Fig. 2

## Fig. 3

## Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007035825 A1